# FASCICULE DE BREVET EUROPEEN

(11) **EP 1 524 154 B1**
(45) Date de publication et mention de la délivrance du brevet: **26.01.2011**
(21) Numéro de dépôt: 04300630.3
(22) Date de dépôt: 28.09.2004
(51) Int. Cl.: B60R 5/04, B60R 7/02

(54) **Tablette pliable pour véhicule automobile**
Faltbare Platte für ein Kraftfahrzeug
Foldable panel for an automotive vehicle

(30) Priorité: 17.10.2003 FR 0312145
(43) Date de publication de la demande: 20.04.2005
(73) Titulaire: Peugeot Citroën Automobiles S.A., 78140 Vélizy Villacoublay (FR)
(72) Inventeur: LE DALL, Christophe, Constant, 92150, SURESNES (FR)
(74) Mandataire: Fernandez, Francis Lionel

(56) Documents cités:
- DE-A- 2 927 180
- DE-A- 10 108 329
- FR-A- 1 508 091
- FR-A- 2 598 994
- GB-A- 2 297 953
- JP-A- 2002 160 564
- US-A- 2 001 252
- US-A- 4 824 171
- PATENT ABSTRACTS OF JAPAN vol. 0090, no. 55 (M-362), 9 mars 1985 (1985-03-09) -& JP 59 190040 A (NIHON HATSUJIYOU KK), 27 octobre 1984 (1984-10-27)

## Description

L'invention se rapporte à une tablette pliable pour véhicule automobile et plus particulièrement à une plage arrière.

Le document JP 2002-160564A décrit une tablette pliable selon le préambule de la revendication 1.

Les véhicules automobiles proposent toujours plus de configurations intérieures possibles pour, par exemple, dégager des espaces de rangement supplémentaires ou augmenter le nombre de places assises. Ainsi de plus en plus de véhicules proposent une troisième rangée de sièges indépendants qui est généralement située dans le coffre.

Cette troisième rangée est le plus souvent constituée de sièges escamotables qui, lorsqu'ils sont utilisés, s'approprient le volume du coffre. Par conséquent, la plage arrière, appelée également cache-bagages, n'est plus utilisable lorsqu'au moins un des sièges est installé. Il n'est alors plus possible de dissimuler des bagages dans le coffre.

Le but de la présente invention est de pallier tout ou partie les inconvénients cités précédemment en proposant une tablette pliable capable d'être utilisée pour couvrir intégralement ou partiellement un volume comme un coffre de véhicule automobile.

A cet effet, l'invention se rapporte à une tablette pliable pour véhicule automobile comprenant au moins une articulation longitudinale pour permettre l'accès au volume situé sous ladite tablette caractérisé en ce qu'elle comprend également au moins une articulation transversale permettant le fractionnement dudit volume.

Conformément à d'autres caractéristiques avantageuses de l'invention :
- chaque articulation transversale est interrompue par chaque articulation longitudinale pour autoriser les mouvements indépendants des unes par rapport aux autres lorsque ladite tablette est sensiblement horizontale ;
- ledit volume est le coffre dudit véhicule automobile, ledit fractionnement permettant de conserver une partie du coffre fermée et d'obtenir une partie ouverte pour notamment y installer un siège ;
- la tablette comprend deux séries d'articulations longitudinales pour, lors de phase de non-utilisation, la ranger par pliage en un minimum de volume ; Ce sont des séries d'articulations car chaque articulation longitudinale est interrompue pour permettre également le pliage transversal ;
- la tablette comprend trois séries d'articulations transversales qui découpent ladite tablette en deux petites parties latérales et deux grandes parties centrales, lesdites parties latérales étant aptes à servir de moyens de fixation sur le cadre dudit volume.

D'autres particularités et avantages ressortiront clairement de la description qui en est faite ci-après, à titre indicatif et nullement limitatif, en référence aux dessins annexés, dans lesquelles :
- la figure 1 est une vue schématique en perspective de la tablette selon l'invention dans sa position dépliée ;
- la figure 2 est une vue schématique en perspective de la tablette selon l'invention dans sa position pliée.

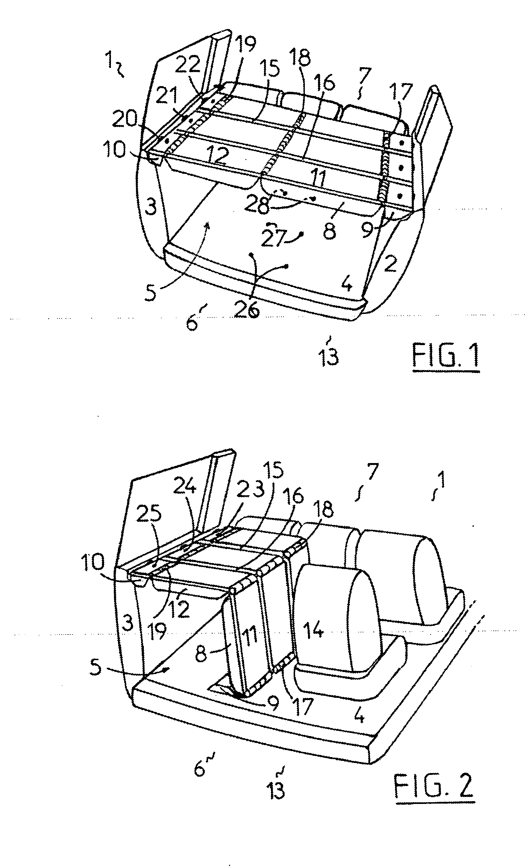

Dans l'exemple illustré à la figure 1, on peut voir une section de la partie arrière d'un véhicule automobile généralement annotée 1. Elle comporte un cadre 13 qui délimite le coffre 6 et comprend des panneaux de structure latéraux 2, 3 et horizontaux 4 (le pavillon n'est pas représenté) pour former le volume 5 dudit coffre. Le volume 5 est également délimité par les sièges arrières 7 et l'ouvrant arrière (non représenté). Comme illustré dans cette figure, le volume 5 est divisé en hauteur par une tablette arrière 8. La fonction de cette tablette est de ne pas porter à la vue de personnes malveillantes d'éventuels objets présents dans le coffre mais également de pouvoir poser des objets par-dessus.

Dans l'exemple illustré aux figures 1 et 2, la tablette pliable 8 est constituée de quatre parties distinctes : deux latérales 9, 10 et deux centrales 11, 12 (les parties latérales 9 et 10 étant plus petites que les centrales 11 et 12). Cette configuration de la tablette pliable 8 est préférée car elle permet de symétriquement fractionner à gauche comme à droite le coffre 6. De cette manière, on peut par exemple placer un siège 14 à droite ou à gauche du volume fractionné. Le siège 14 peut bien évidemment être escamoté du sol 4 ou fixé dessus grâce à un système prévu à cet effet.

Les quatre parties principales 9, 10, 11 et 12 coopèrent entre elles au moyen d'articulations longitudinales 15 et 16 qui sont parallèles à la longueur de la tablette 8 et d'articulations transversales 17, 18 et 19 qui sont sensiblement perpendiculaires aux articulations longitudinales 15 et 16. Les unes 15, 16 et les autres 17, 18, 19 s'interrompent entre elles pour finalement former des séries d'articulations qui permettront des mouvements indépendants entre elles. Ainsi lorsque la tablette pliable 8 est en position sensiblement horizontale, comme dans l'exemple illustré à la figure 1, on pourra alors choisir soit un pliage par les articulations longitudinales 15 et/ou 16 pour, par exemple, accéder au volume 5 soit un pliage par les articulations transversales 17, 18 et/ou 19 pour fractionner ce même volume. Les séries d'articulations longitudinales 15 et 16 sont, de manière préférée, constituées par un amincissement de matière de la tablette 8 créant une zone de faiblesse apte à se déformer élastiquement.

Préférentiellement, la tablette pliable 8 comporte deux séries d'articulations longitudinales 15 et 16 de manière à pouvoir la ranger plus facilement. En effet, si une articulation 16 est pratique pour ne pas avoir à soulever la tablette 8 entièrement pour accéder au coffre, deux articulations 15 et 16 permettent un pliage final de la tablette 8 peu encombrant pour un rangement aisé par exemple dans le véhicule lui-même ou dans son garage.

Dans la mesure où cette configuration des articulations longitudinales 15 et 16 est préférée, cela implique à chaque articulation transversale 17, 18 et 19 d'être formée par trois charnières parallèles mais non jointives pour respectivement faire coopérer les parties 9-11, 11-12 et 12-10 entre elles.

Les parties latérales 9 et 10 de la tablette 8 comportent des doigts 20, 21 et 22 aptes à coopérer avec des creux (non visibles) réalisés sur le cadre 13 du coffre 6 respectivement sur les panneaux de structure latéraux 2 et 3. La tablette pliable 8 est ainsi suspendue sur toute la largeur du véhicule automobile. Les parties 9 et 10 comportent également des moyens de clippage 23, 24 et 25 aptes à coopérer avec ceux 26, 27 et 28 présents sur le plancher 4 du coffre 6 pour permettre, lorsqu'on désire fractionner ledit coffre, de solidariser une des parties latérales 9, 10 au plancher 4 (comme illustré à la figure 2).

Pour passer de la configuration de la tablette 8 dépliée (figure 1) à celle pliée (figure 2), il suffit donc de soulever la partie latérale 9 que l'on souhaite escamoter afin que ses doigts 20, 21 et 22 sortent desdits creux du panneau de structure latéral 2 puis de plier la tablette 8 grâce aux articulations 17 et 18 jusqu'à la position de la figue 2 pour pouvoir faire coopérer les moyens de clippage 23, 24 et 25 avec ceux 26, 27 et 28 présents sur le plancher 4 du coffre 6. On obtient alors un volume de coffre 5 plus petit que l'initial qui permet aux objets de rester bloqués à l'intérieur mais également cachés de l'extérieur tout en autorisant, par exemple, à un siège 14 d'être placé pà côté.

Bien entendu, la présente invention ne se limite pas à l'exemple illustré mais est susceptible de diverses variantes et modifications qui apparaîtront à l'homme de l'art. En particulier, des rangements supplémentaires peuvent être implantés sur la tablette 8 comme, par exemple, des filets qui quand la tablette 8 est pliée peuvent servir d'aumônières. Le nombre d'articulations 15, 16, 17, 18 et 19 peut également varier suivant l'endroit et/ou l'utilisation que l'on en fait dans le véhicule. Enfin, il va de même pour les moyens de fixations 20, 21, 22, 23, 24, 25, 26, 27 et 28.

## Revendications

1. Tablette pliable (8) pour véhicule automobile comprenant des moyens de fixation (20, 21, 22), au moins une articulation longitudinale (15, 16) pour permettre l'accès au volume situé sous ladite tablette, au moins une articulation transversale (17, 18, 19) permettant le fractionnement dudit volume **caractérisé en ce que** chaque articulation transversale (17, 18, 19) est interrompue par chaque articulation longitudinale (15, 16) pour autoriser les mouvements indépendants des unes par rapport aux autres lorsque ladite tablette est sensiblement horizontale.

2. Tablette pliable (8) selon une des revendications précédentes, **caractérisé en ce qu'**elle comprend deux séries d'articulations longitudinales (15, 16) pour, lors de phase de non utilisation, la ranger par pliage en un minimum de volume.

3. Tablette pliable (8) selon une des revendications précédentes, **caractérisé en ce qu'**elle comprend trois séries d'articulations transversales (17, 18, 19) qui découpent ladite tablette en deux petites parties latérales (9, 10) et deux grandes parties centrales (11, 12), lesdites parties latérales étant aptes à servir de moyens de fixation (20, 21, 22, 23, 24, 25) sur le cadre (13) dudit volume.

4. Tablette pliable (8) selon la revendication 3, **caractérisé en ce que** les deux grandes parties centrales (11, 12) sont identiques pour autoriser un fractionnement symétrique du type gauche - droite du volume (5).

5. Tablette pliable (8) selon la revendication 3 ou 4, **caractérisé en ce que** les petites parties latérales (9, 10) comportent des moyens de clippage (23, 24, 25) pour permettre de bloquer en position pliée la tablette (8).

6. Véhicule automobile **caractérisé en ce qu'**il comporte un coffre (6) comprenant une tablette pliable (8) conforme à l'une des revendications précédentes pour autoriser un fractionnement de son volume (5) tout en conservant une partie fermée.

## Claims

1. Foldable shelf (8) for a motor vehicle, comprising fixing means (20, 21, 22), at least one longitudinal articulation (15, 16) to permit access to the volume situated beneath the said shelf, at least one transverse articulation (17, 18, 19) permitting the splitting up of the said volume, **characterized in that** each transverse articulation (17, 18, 19) is interrupted by each longitudinal articulation (15, 16) to permit independent movements with respect to each other when the said shelf is substantially horizontal.

2. Foldable shelf (8) according to one of the preceding claims, **characterized in that** it comprises two series of longitudinal articulations (15, 16) to store it by folding in a minimum volume in a non-use phase.

3. Foldable shelf (8) according to one of the preceding claims, **characterized in that** it comprises three series of transverse articulations (17, 18, 19) which divide up the said shelf into two small lateral parts (9, 10) and two large central parts (11, 12), the said lateral parts being suited to serve as fixing means (20, 21, 22, 23, 24, 25) on the frame (13) of the said volume.

4. Foldable shelf (8) according to Claim 3, **characterized in that** the two large central parts (11, 12) are identical, to permit a symmetrical splitting up of the left-right type of the volume (5).

5. Foldable shelf (8) according to Claim 3 or 4, **characterized in that** the small lateral parts (9, 10) comprise clipping means (23, 24, 25) to allow the shelf (8) to be locked in the folded position.

6. Motor vehicle, **characterized in that** it comprises a boot (6) comprising a foldable shelf (8) according to one of the preceding claims, to permit a splitting up of its volume (5) whilst maintaining a closed part.

## Patentansprüche

1. Faltbare Platte (8) für Kraftfahrzeug, die Befestigungsmittel (20, 21, 22), mindestens eine Längsanlenkung (15, 16), um den Zugang zum dem Raum unterhalb der Platte zu erlauben, mindestens eine Queranlenkung (17, 18, 19), die das Unterteilen des Raums erlaubt, aufweist, **dadurch gekennzeichnet, dass** die Queranlenkung (17, 18, 19) von jeder Längsanlenkung (15, 16) unterbrochen wird, um unabhängige Bewegungen zueinander zu erlauben, wenn die Platte im Wesentlichen horizontal ist.

2. Faltbare Platte (8) nach einem der vorhergehenden Ansprüche, **dadurch gekennzeichnet, dass** sie zwei Reihen Längsanlenkungen (15, 16) aufweist, um bei der Phase ohne Nutzung die Platte durch Falten auf einem minimalen Raum zu verstauen.

3. Faltbare Platte (8) nach einem der vorhergehenden Ansprüche, **dadurch gekennzeichnet, dass** sie drei Reihen Queranlenkungen (17, 18, 19) aufweist, die die Platte in zwei kleine seitliche Teile (9, 10) und zwei große zentrale Teile (11, 12) unterteilen, wobei die seitlichen Teile als Befestigungsmittel (20, 21, 22, 23, 24, 25) auf dem Rahmen (13) des Raums dienen können.

4. Faltbare Platte (8) nach Anspruch 3, **dadurch gekennzeichnet, dass** die zwei großen zentralen Teile (11, 12) identisch sind, um ein symmetrisches Unterteilen des Typs links - rechts des Raums (5) zu gestatten.

5. Faltbare Platte (8) nach einem der Ansprüche 3 oder 4, **dadurch gekennzeichnet, dass** die kleinen seitlichen Teile (9, 10) Klemmmittel (23, 24, 25) aufweisen, um es zu erlauben, die Platte (8) in gefalteter Position zu blockieren.

6. Kraftfahrzeug, **dadurch gekennzeichnet, dass** es einen Kofferraum (6) aufweist, der eine faltbare Platte (8) nach einem der vorhergehenden Ansprüche aufweist, um ein Aufteilen seines Raums (5) unter Geschlossenhalten eines Teils zu gestatten.
